# EUROPÄISCHE PATENTSCHRIFT

(11) **EP 3 798 487 B1**
(45) Veröffentlichungstag und Bekanntmachung des Hinweises auf die Patenterteilung: **25.06.2025**
(21) Anmeldenummer: 20198415.0
(22) Anmeldetag: 25.09.2020
(51) Int. Cl.: F16L 3/137, F16L 33/08, H02G 3/32, B21D 53/36, B65D 63/02, F16L 33/04

(54) **SPANNSCHELLE**
TENSIONING CLAMP
COLLIER DE SERRAGE

(30) Priorität: 25.09.2019 DE 102019125813
(43) Veröffentlichungstag der Anmeldung: 31.03.2021
(73) Patentinhaber: BauConnect GmbH & Co. KG, 86653 Monheim (DE)
(72) Erfinder: Felber, Winfried, 86653 Monheim (DE)
(74) Vertreter: Canzler & Bergmeier Patentanwälte Partnerschaft mbB

(56) Entgegenhaltungen:
- FR-A1- 2 685 433
- GB-A- 1 486 095
- US-A- 2 363 206
- US-A- 6 044 525

## Beschreibung

Die vorliegende Erfindung betrifft eine Spannschelle, insbesondere Rohrschelle, mit einem Spannband, das ein erstes Ende, ein dazu gegenüberliegendes zweites Ende und zumindest eine Aussparung aufweist, dass eines der beiden Enden durch die Aussparung in Radialrichtung der Spannschelle von innen nach außen geführt ist, so dass beide Enden am Außenumfang der Spannschelle angeordnet sind.

Aus der WO 2013/156830 A1 ist ein Spanngurt zum Verbinden von Rohren bekannt. Der Spanngurt weist zwei Enden auf, welche mittels einer Spannschraube auseinandergedrückt werden können, um den Spanngurt zu spannen. Nachteilig an einem derartigen Spanngurt ist, dass mit diesem eine Haltekraft begrenzt ist.

In der US 2,363,206 A1 ist ein Spannband bekannt, bei dem die Enden mittels einer Schraube zusammengezogen werden können, um einen Schlauch zu befestigen. Offenbart ist eine Schlauchschelle, die eine Bandkonstruktion mit einem Schlitz umfasst, durch den eine Zunge geführt wird. Das Band wird aufgerollt und überlappt, sodass die Zunge von der Innenseite des Bandes nach außen geführt wird. Eine Klammer wird verwendet, um die Bandenden zusammenzuführen und eine Umfangsbewegung der Zunge relativ zum Band zu ermöglichen. Ein Verbindungsstück ("tie") überbrückt den Schlitz, um die Bandteile auf beiden Seiten zu verbinden und das Band in Position zu halten. Diese Konstruktion verhindert ein Verschieben der Schelle und ermöglicht eine gleichmäßige Druckverteilung.

Die FR 2,685,433 A1 offenbart einen Schellenmechanismus zum Fixieren eines flexiblen Mantels auf einem zylindrischen Element, beispielsweise einem Kabel. Die Schelle umfasst ein flexibles Band mit einer ersten konstant breiten und einem zweiten breiteren Abschnitt, der einen länglichen Schlitz aufweist. Diese Anordnung ermöglicht es, dass ein erstes Teil in den Schlitz eines zweiten Teils eingreift und vor dem Schließen der Klemme mindestens eine Umdrehung um die Hülse macht, wodurch eine gleichmäßige Klemmung über den gesamten Klemmumfang erreicht wird.

Aufgabe der vorliegenden Erfindung ist es somit, den Stand der Technik zu verbessern.

Die Aufgabe wird gelöst durch eine Spannschelle sowie die Verwendung eines Spannbands als die besagte Spannschelle mit den Merkmalen der unabhängigen Patentansprüche.

Vorgeschlagen wird eine Spannschelle. Die Spannschelle kann beispielsweise eine Rohrschelle sein, so dass mit dieser beispielsweise Rohre verbunden werden können. Es ist vorteilhaft, wenn die Spannschelle aus einem Metall ausgebildet ist, um hohen Kräften standhalten zu können. Die Spannschelle kann auch auf eine Rohrkupplung angeordnet werden, mittels der zwei Rohre miteinander verbunden werden. Die Spannschelle kann die Rohrkupplung bzw. eine Dichtung auf ein Rohrende pressen. Die Spannschelle kann somit auf das Rohr mit zwischen Rohr und Spannschelle angeordneter Rohrkupplung gequetscht werden.

Die Spannschelle weist ein Spannband auf. Das Spannband ist bandförmig und ist bei verwendungsgemäßer Bestimmung in Umfangsrichtung zumindest einmal, insbesondere mehrmals und/oder mehrlagig umschlingend, um das Rohr bzw. um die Rohrkupplung gelegt. Das Spannband ist somit bei verwendungsgemäßer Bestimmung eingerollt, aufgerollt, aufgewickelt, gewunden bzw. umschlingt das Rohr in Umfangsrichtung. Das Spannband kann mit einer Spannkraft beaufschlagt werden, so dass die Spannschelle auf das Rohr gepresst wird.

Außerdem weist das Spannband ein erstes Ende und ein, insbesondere dazu gegenüberliegendes, zweites Ende auf. Zwischen den beiden Enden erstreckt sich das Spannband.

Des Weiteren weist das Spannband zumindest eine Aussparung auf. Die Aussparung ist durchgehend ausgebildet, so dass das Spannband einen Durchbruch bzw. eine Durchgangsöffnung aufweist. Dabei ist eines der beiden Enden durch die Aussparung in Radialrichtung der Spannschelle von innen nach außen geführt, so dass beide Enden am Außenumfang der Spannschelle angeordnet sind.

Dabei ist bei verwendungsgemäßer Bestimmung eines der beiden Enden durch die Aussparung geführt, wobei sich infolgedessen die Spannschelle bildet. Für die Beschreibung der Erfindung kann es nützlich sein, wenn das Spannband noch nicht zur Spannschelle aufgewickelt ist oder wenn das Spannband zur Spannschelle aufgewickelt ist. Ferner ist bei verwendungsgemäßer Bestimmung die Spannschelle bzw. das Spannband in Umfangsrichtung geschlossen. Die Spannschelle umschlingt das Rohr bei verwendungsgemäßer Bestimmung in Umfangsrichtung. Die Spannschelle ist somit ringförmig. Das Spannband ist, wenn es zur Spannschelle aufgewickelt, eingerollt bzw. aufgerollt ist, vorzugsweise spiralförmig, wobei beide Enden am Außenumfang sind. Das Spannband ist lediglich in eine Richtung orientiert. Das Spannband ist schlaufenfrei. Das Spannband weist eine einzige Windungsrichtung auf.

Wenn beide Enden des Spannbandes am Außenumfang der Spannschelle angeordnet sind, kann das Spannband mit einer Spannkraft beaufschlagt werden, um die Spannschelle auf das Rohr zu quetschen. Die beiden Enden können somit aufeinander zugezogen werden.

Erfindungsgemäß weist das Spannband zumindest einen in Umfangsrichtung der Spannschelle erstreckenden Überlappungsbereich auf, in dem das Spannband in Radialrichtung zumindest zweilagig übereinanderliegt. Die zumindest zwei Lagen des Spannbands liegen im bestimmungsgemäßen Gebrauch im Überlappungsbereich in Radialrichtung, insbesondere unmittelbar, aneinander an. Hierdurch ist zwischen den Lagen im bestimmungsgemäßen Gebrauch eine Haftreibung ausgebildet. In dem Überlappungsbereich presst sich, wenn das Spannband auf das Rohr gepresst ist, ein in Radialrichtung äußerer Bereich bzw. Abschnitt des Spannbandes auf einen darunterliegenden Bereich bzw. Abschnitt des Spannbandes. Im Überlappungsbereich kann sich Haftreibung ausbilden, so dass die Haltekraft erhöht ist, wenn die Spannschelle auf das Rohr gepresst ist. Im Überlappungsbereich kann ferner zwischen dem übereinanderliegenden Spannband eine Selbsthemmung ausgebildet sein. Ist das Spannband eingerollt, um das Rohr gelegt und mit einer Spannkraft beaufschlagt, pressen sich die Bereiche des Spannbandes im Überlappungsbereich aufeinander. Im Überlappungsbereich hemmt sich das Spannband selbst gegen ein Öffnen der Spannschelle, so dass die Haltekraft der Spannschelle erhöht ist. Das Spannband bildet mit sich selbst die Selbsthemmung aus. Eine Spanneinheit der Spannschelle kann somit vorteilhafterweise kleiner dimensioniert werden, da sie nur eine reduzierte Haltekraft aufnehmen muss.

Die Haltekraft erhöht sich ferner von selbst, wenn das Rohr mit einem Innendruck beaufschlagt ist. Der Innendruck wirkt ebenfalls auf das Spannband und infolgedessen auch in dem zumindest einen Überlappungsbereich. Da das Spannband im Überlappungsbereich zumindest zweilagig ist, liegt ein in Radialrichtung oberer Abschnitt des Spannbandes auf einem in Radialrichtung unteren Abschnitt des Spannbandes. Durch den Innendruck wird im Überlappungsbereich der untere Abschnitt in Radialrichtung nach Außen gegen den oberen Abschnitt gepresst. Die Selbsthemmung wird dadurch weiter erhöht. Eine Fixierkraft, welche nötig ist, um ein Öffnen des Spannbandes zu verhindern, wenn das Rohr mit einem Innendruck beaufschlagt ist, verringert sich infolgedessen, so dass die beiden Enden, wenn das Spannband gespannt ist, mit verhältnismäßig geringen bzw. einfachen Mitteln gegeneinander fixiert werden können. Dadurch kann auf starke Gewindebolzen verzichtet werden. Die gesamte Spannbandsicherung kann beispielsweise mit nur einem, insbesondere zwei, Spannschlöß, beispielsweise einer Schlauchschelle, erfolgen. Der Spannvorgang selbst kann aber auch mittels einem abnehmbaren Tangentialspanner vorgenommen werden. Der Tangentialspanner ist ein Werkzeug, mittels dem das Spannband gespannt werden kann. Mittels dem Tangentialspanner kann die zum Spannen des Spannbandes benötigte Spannkraft ausgebildet werden, die im Vergleich zur Haltekraft um ein Vielfaches höher ist. Ist das Spannband gespannt, kann das Spannband bzw. die beiden Enden mit dem zumindest einen Spannschloß fixiert werden und der Tangentialspanner kann wieder entfernt werden.

Der Überlappungsbereich ist dabei derart ausgebildet, dass sich beim Schließen oder beim Öffnen des Spannbandes, also wenn ein Umfang der Spannschelle verringert oder vergrößert wird, die übereinanderliegenden Bereiche des Spannbandes in entgegengesetzte Umfangsrichtung gegeneinander verschieben. Insbesondere können sich die übereinanderliegenden Bereiche des Spannbandes im Überlappungsbereich in Umfangsrichtung gegeneinander verschieben und werden sich auch gegeneinander verschieben, wenn die Spannschelle geöffnet oder geschlossen wird. Dies unterscheidet beispielsweise ein zweilagiges Band, bei dem zur Erhöhung der Zugfestigkeit das Band doppelt gelegt ist, wobei dort ebenfalls ein überlappender Bereich ausgebildet wird. Ferner kann eine lückenlose Spannkraftaufbringung auf das Kreisprofil von 360° erfolgen.

Vorteilhaft ist es, wenn der zumindest eine Überlappungsbereich in Umfangsrichtung benachbart zur Aussparung und/oder zum durch die Aussparung durchgeführten Ende angeordnet ist. Zusätzlich oder alternativ ist es vorteilhaft, wenn der zumindest eine Überlappungsbereich in Umfangsrichtung zwischen der Aussparung und dem durch die Aussparung durchgeführten Ende angeordnet ist.

Vorteilhaft ist es, wenn das Spannband zumindest zweimal eingerollt ist. Das Spannband weist, wenn es zur Spannschelle geschlossen ist, zumindest zwei Wicklungen auf. Eine Wicklung entspricht dabei einer Umgreifung bzw. Umwicklung des Spannbandes um 360°. Eine entsprechende mehrfache Umgreifung, Umwicklung bzw. Umschlingung entspricht somit einem entsprechenden Vielfachen von 360°. Das Spannband weist infolgedessen eine entsprechend höhere Länge zwischen dem ersten und dem zweiten Ende auf, so dass das Spannband auch zweimal um das Rohr gelegt bzw. zur Spannschelle aufgewickelt bzw. eingerollt werden kann. Dadurch kann ein Flaschenzugeffekt ausgebildet werden. Die Spannkraft, die zum Spannen der Spannschelle benötigt wird, sinkt dabei, wohingegen ein Spannweg, um den das Spannband gespannt wird, entsprechend vergrößert wird. Dabei kann das Spannband auch zumindest dreimal, viermal oder fünfmal eingerollt sein, so dass der Flaschenzugeffekt entsprechend vergrößert wird. Das Spannband kann auch mehr als fünfmal eingerollt sein. Das Spannband ist mit der Aussparung oder Durchbrüchen/Ausschnitten versehen, damit eine Mehrfachumschlingung erfolgen kann, um die Spann- bzw. Haltekraft zu steigern.

Jede 360° Umgreifung des Spannbandes addiert den Spannweg nach der Formel Durchmesser x 3,14. Jede 360° Umgreifung steigert die Kraft am Spann- bzw. am Fixierschloss um den Faktor +1.

Beispielsweise ist die Haltekraft bei Innendruck bei einer 3-fachen Umgreifung um das ca. 10-fache höher gegenüber einer 1-fachen 360° Umgreifung.

Durch die mehrfache Umschlingung wirkt beim Spannen, beispielsweise mittels einem externen Werkzeug wie dem abnehmbaren Tangentialspanner, eine hohe Spannkraft und eine noch höhere Haltekraft.

Von Vorteil ist es, wenn das Spannband zumindest zweimal, insbesondere drei-, vier- oder fünfmal, in Umfangsrichtung aufgewickelt ist. Das Spannband weist somit entsprechend viele Wicklungen auf, und erstreckt sich entsprechend der Anzahl der Wicklungen entsprechend oft in Umfangsrichtung um die Spannschelle bzw. das Rohr, wenn die Spannschelle um das Rohr gelegt ist. Dadurch ist ebenfalls der Flaschenzugeffekt ausgebildet.

Vorteilhaft ist es, wenn der zumindest eine Überlappungsbereich zwischen zumindest einem der beiden Enden und einem in Radialrichtung darunter angeordneten Bereich des Spannbandes ausgebildet ist. Am ersten Ende kann ein erster Endbereich und am zweiten Ende ein zweiter Endbereich angeordnet sein. Der Überlappungsbereich ist dann zwischen zumindest einem der beiden Endbereiche und dem in Radialrichtung darunter angeordneten Bereich des Spannbandes angeordnet. Dadurch ist das zumindest eine Ende und/oder der zumindest eine zugeordnete Endbereich auf den in Radialrichtung darunter angeordneten Bereich des Spannbandes gepresst, wenn die Spannschelle gespannt ist.

Von Vorteil ist es, wenn zumindest eines der beiden Enden flach, insbesondere in dem entsprechenden Überlappungsbereich, auf dem Spannband aufliegt. Zumindest ein Ende ist somit tangential zur Spannschelle orientiert und liegt an der Spannschelle bzw. dem Spannband an. Dadurch liegt die Spannschelle eng an dem Rohr an. Dadurch ist ein Durchmesser der Spannschelle verringert. Ferner wird der Überlappungsbereich in Umfangsrichtung vergrößert. Außerdem wird dadurch die Haftreibung des Überlappungsbereichs zwischen dem zumindest einen Ende bzw. des dem Ende zugeordneten Endbereichs der Spannschelle und dem in Radialrichtung darunter angeordneten Bereich der Spannschelle vergrößert. Die Spannschelle weist somit eine höhere Haltekraft auf, wenn diese gespannt ist.

Vorteilhaft ist es, wenn in dem zumindest einen Überlappungsbereich die in Radialrichtung übereinanderliegenden Bereiche des Spannbandes eine gleiche Orientierung in Umfangsrichtung aufweisen. Das Spannband ist somit lediglich in eine der beiden Umfangsrichtungen aufgewickelt bzw. eingerollt. Das Spannband weist eine einzige Windungsrichtung auf.

Zusätzlich oder alternativ ist es vorteilhaft, wenn das Spannband lediglich in eine Umfangsrichtung orientiert ist.

Das Spannband weist somit lediglich eine einzige Windungsrichtung auf. Das Spannband ist somit insbesondere nicht gefaltet. Das Spannband weist somit keine Schlaufen auf. Das Spannband kann links- oder rechtsgewickelt sein.

Das Spannband erstreckt sich über mehr als 720° in Umfangsrichtung. Vorteilhaft ist es, wenn sich das Spannband über mehr als 1080° oder 1440° in Umfangsrichtung erstreckt. Das Spannband liegt im Bereich der zumindest einen Aussparung in Radialrichtung mehrlagig, insbesondere zumindest zweilagig, dreilagig oder vierlagig, übereinander. Zusätzlich ist es vorteilhaft, wenn das Spannband in dem zumindest einen Überlappungsbereich in Radialrichtung mehrlagig, insbesondere zumindest zweilagig, dreilagig oder vierlagig, übereinander liegt.

Von Vorteil ist es, wenn sich der zumindest eine Überlappungsbereich über zumindest 360° in Umfangsrichtung erstreckt. Ferner kann sich der zumindest eine Überlappungsbereich auch über zumindest 720°, 1080°, 1440° in Umfangsrichtung erstrecken. Dadurch ist die Haftreibung zwischen den in Radialrichtung übereinanderliegenden Bereichen des Spannbandes vergrößert.

Vorteilhaft ist es, wenn das Spannband zumindest zwei, insbesondere separate und/oder in Umfangsrichtung zueinander beabstandete, Überlappungsbereiche aufweist. Auch ist es vorteilhaft, wenn der erste Überlappungsbereich dem ersten Ende und der zweite Überlappungsbereich dem zweiten Ende zugeordnet ist. Weiterhin kann das Spannband auch mehrere Überlappungsbereiche aufweisen. Dadurch wird die Haftreibung der Überlappungsbereiche erhöht. Infolgedessen ist eine Haltekraft der Spannschelle, wenn diese gespannt ist, erhöht.

Von Vorteil ist es, wenn die Überlappungsbereiche in Axialrichtung der Spannschelle voneinander beabstandet sind. Die Axialrichtung der Spannschelle ist parallel zur Axialrichtung des Rohrs, wenn die Spannschelle auf dem Rohr angeordnet ist.

Zusätzlich oder alternativ ist es von Vorteil, wenn die Überlappungsbereiche in Umfangsrichtung der Spannschelle voneinander beabstandet sind. Die Umfangsrichtung ergibt sich auch erst dann, wenn das Spannband zur Spannschelle eingerollt ist.

Zusätzlich oder alternativ ist es von Vorteil, wenn die Überlappungsbereiche in Radialrichtung der Spannschelle voneinander beabstandet sind. Die Radialrichtung ergibt sich auch erst dann, wenn das Spannband zur Spannschelle eingerollt ist.

Vorteilhaft ist es, wenn eine Winkelsumme der Überlappungsbereiche in Umfangsrichtung zumindest 360°, insbesondere 720°, 1080°, 1440°, ist. Auch dadurch ist die Haftreibung und somit die Haltekraft der Spannschelle erhöht.

Vorteilhaft ist es, wenn im Bereich oder in zumindest einem ersten Überlappungsbereich das erste Ende am Außenumfang der Spannschelle angeordnet ist. Unter dem ersten Ende bzw. dem dem ersten Ende zugeordneten ersten Endbereich des Spannbandes ist somit ein weiterer Bereich des Spannbandes angeordnet. Der erste Überlappungsbereich ist somit zwischen dem ersten Ende und/oder dem ersten Endbereich und dem darunter angeordneten Spannband ausgebildet.

Zusätzlich oder alternativ ist es von Vorteil, wenn im Bereich oder in zumindest einem zweiten Überlappungsbereich das zweite Ende am Außenumfang der Spannschelle angeordnet ist. Unter dem zweiten Ende bzw. dem dem zweiten Ende zugeordneten zweiten Endbereich des Spannbandes ist somit ein weiterer Bereich des Spannbandes angeordnet. Der zweite Überlappungsbereich ist somit zwischen dem zweiten Ende und/oder dem zweiten Endbereich und dem darunter angeordneten Spannband ausgebildet.

Vorteilhaft ist es, wenn der erste Überlappungsbereich benachbart zum ersten Ende und/oder der zweite Überlappungsbereich benachbart zum zweiten Ende angeordnet ist.

Auch ist es vorteilhaft, wenn die zumindest eine Aussparung in Umfangsrichtung zwischen den beiden Überlappungsbereichen angeordnet ist. Wenn das Spannband mehrere Windungen aufweist, ist es vorteilhaft, wenn zumindest zwei Aussparungen des Spannbandes, die vorzugsweise in zwei unterschiedlichen Lagen ausgebildet sind, in Umfangsrichtung zwischen den beiden Überlappungsbereichen angeordnet sind und/oder sich zumindest teilweise überlappen. Hierdurch ist sichergestellt, dass das von innen nach außen geführte Ende durch mehrere Lagen des Spannbandes geführt werden kann.

Vorteilhaft ist es, wenn das Spannband zumindest einen einfachen Überlappungsbereich aufweist, in dem das Spannband zweilagig übereinanderliegt.

Zusätzlich oder alternativ ist es von Vorteil, wenn die Spannschelle zumindest einen doppelten Überlappungsbereich aufweist, in dem das Spannband dreilagig übereinanderliegt. Dadurch wird die Haftreibung des Spannbandes mit sich selbst erhöht. Dadurch wird auch die Selbsthemmung erhöht. Infolgedessen wird die Haltekraft des gespannten Spannbandes erhöht. Wenn das Spannband dreilagig übereinanderliegt, verschieben sich die entsprechenden Lagen des Spannbandes derart, dass die mittlere Lage des Spannbandes gegenüber der in Radialrichtung darunter und der in Radialrichtung darüber liegenden Lage des Spannbandes in entgegengesetzter Richtung verschoben wird, wenn die Spannschelle geöffnet oder geschlossen wird. Die Haftreibung ist somit zwischen jeweils in Radialrichtung aneinander liegenden Bereichen des Spannbandes ausgebildet.

Zusätzlich oder alternativ ist es von Vorteil, wenn die Spannschelle zumindest einen mehrfachen Überlappungsbereich aufweist, in dem das Spannband mehrlagig übereinanderliegt. Dadurch wird die Haltekraft noch weiter erhöht.

Vorteilhaft ist es, wenn das Spannband zumindest zwei Aussparungen aufweist. Das Spannband kann ferner auch mehr als zwei Aussparungen aufweisen. Durch die Aussparungen kann das Spannband in Radialrichtung von innen nach außen geführt sein.

Vorteilhaft ist es, wenn die zumindest zwei Aussparungen zum Durchführen des ersten Endes derart in Umfangsrichtung angeordnet sind, dass diese sich zumindest teilweise in Radialrichtung überdecken.

Zusätzlich oder alternativ ist es von Vorteil, wenn die Aussparungen in Axialrichtung des Spannbandes voneinander beabstandet angeordnet sind.

Zusätzlich oder alternativ ist es von Vorteil, wenn die Aussparungen in Umfangsrichtung des Spannbandes voneinander beabstandet angeordnet sind.

Von Vorteil ist es, wenn das Spannband zumindest zwei Aussparungen aufweist, die derart in Umfangsrichtung angeordnet sind, dass diese sich bei geschlossener Spannschelle zumindest teilweise überschneiden. Dadurch kann, wenn das Spannband eingerollt ist, eines der beiden Enden gleichzeitig durch beide Aussparungen hindurch in Radialrichtung von innen nach außen geführt werden.

Vorteilhaft ist es, wenn das Spannband zumindest drei Aussparungen aufweist, welche in Umfangsrichtung äquidistant voneinander angeordnet sind. Dadurch liegen die Aussparungen, wenn das Spannband eingerollt ist, übereinander, so dass das Spannband durch die Aussparungen hindurchgeführt werden kann. Die drei Aussparungen überschneiden sich, wenn das Spannband eingerollt ist.

Von Vorteil ist es, wenn das Spannband zumindest eine dem ersten Ende zugeordnete erste Endaussparung aufweist. Die erste Endaussparung ist somit im ersten Endbereich des Spannbandes angeordnet. Zusätzlich oder alternativ kann das Spannband zumindest eine dem zweiten Ende zugeordnete zweite Endaussparung aufweisen. Die zweite Endaussparung ist somit im zweiten Endbereich des Spannbandes angeordnet. Wenn das Spannband eingerollt ist, können sich die beiden Endaussparungen in Radialrichtung überschneiden. Die Endaussparungen sind dann jeweils in der dazugehörigen anderen Endaussparung angeordnet.

Zusätzlich oder alternativ kann zwischen den beiden Enden zumindest eine Mittelaussparung angeordnet sein. Das Spannband weist einen Mittelbereich auf, wobei die Mittelaussparung in diesem Mittelbereich angeordnet ist.

Vorteilhaft ist es, wenn die zumindest eine Aussparung über ihren Umfang geschlossen ist und/oder die zumindest eine Aussparung von Längsseiten des Spannbandes und der der Aussparung zugeordneten Stirnseite des Spannbandes beabstandet ist, so dass die Aussparung vollständig vom Spannband umrandet ist. Jeweils eine Stirnseite ist dabei jeweils einem Ende des Spannbandes zugeordnet. Beispielsweise kann die zumindest eine dem ersten Ende zugeordnete erste Endaussparung und/oder die dem zweiten Ende zugeordnete zweite Endaussparung vollständig vom Spannband umrandet sein. Ist das Spannband durch die Aussparung von innen nach außen geführt, umschließt das Spannband sich selbst vollständig.

Vorteilhaft ist es zusätzlich oder alternativ, wenn die zumindest eine Aussparung an ihrem Umfang eine Öffnung aufweist. Die Aussparung ist demnach umfangsmäßig nicht vollständig geschlossen. Auch ist es vorteilhaft, wenn die zumindest eine Aussparung an zumindest einer Längsseite des Spannbandes angeordnet ist, so dass die entsprechende Aussparung an der zumindest einen entsprechenden Längsseite offen ist.

Zusätzlich oder alternativ ist es von Vorteil, wenn die zumindest eine Aussparung an der zugeordneten Stirnseite des Spannbandes angeordnet ist, so dass die entsprechende Aussparung an der Stirnseite offen ist. Die Aussparung kann beispielsweise die zumindest eine dem ersten Ende zugeordnete erste Endaussparung und/oder die dem zweiten Ende zugeordnete zweite Endaussparung sein. Wenn zumindest eine Aussparung an zumindest einer Längsseite und/oder an zumindest einer Stirnseite angeordnet ist, so dass die Aussparung dort offen ist, kann das Spannband auf einfache Weise durch die Aussparung hindurchgeführt werden.

Vorteilhaft ist es, wenn sich zumindest eine Aussparung von einem Bereich des zugeordneten Endes bis über eine Mitte des Spannbandes in Umfangsrichtung erstreckt. Die Aussparung kann ferner in Umfangsrichtung länger sein als die halbe Länge des Spannbandes in Umfangsrichtung ist. Dadurch kann das Spannband zumindest zweimal eingerollt werden, mit einer derartigen Aussparung.

Von Vorteil ist es, wenn sich zumindest eine Aussparung bei eingerolltem Spannband, also wenn die Spannschelle ausgebildet ist, selbst zumindest einmal in Radialrichtung überschneidet. Dadurch kann das Spannband bzw. ein Ende zweimal durch die Aussparung in Radialrichtung von innen nach außen geführt werden.

Vorteilhaft ist es, wenn die Aussparungen zueinander punktsymmetrisch zu einem Mittelpunkt des Spannbandes ausgebildet sind. Zusätzlich oder alternativ ist es von Vorteil, wenn die Aussparungen symmetrisch zu einer Mitte in Axialrichtung und/oder in Umfangsrichtung des Spannbands ausgebildet sind.

Von Vorteil ist es, wenn die Spannschelle eine Spanneinheit, insbesondere eine Zugkrafteinheit, aufweist, die die beiden in Umfangsrichtung zueinander zugewandten Enden des Spannbandes miteinander verbindet. Mittels der Spanneinheit kann das Spannband mit einer Spannkraft beaufschlagt werden, so dass die Spannschelle gespannt wird. Ferner können zusätzlich oder alternativ mittels der Spanneinheit beide Enden mit der Spannkraft beaufschlagt werden, so dass die Enden aufeinander zuziehbar sind. Die beiden Enden werden somit zusammengezogen. Zusätzlich oder alternativ kann mittels der Spanneinheit das gespannte Spannband auch fixiert werden. Die Spanneinheit ist dann eine Fixiereinheit. Die Spanneinheit kann die Haltekraft aufbringen, die nötig ist, um zu verhindern, dass sich das Spannband öffnet, wenn das Rohr mit einem Innendruck beaufschlagt ist. Mittels der Spanneinheit kann beispielsweise das Spannband fixiert werden, wenn das Spannband mit dem abnehmbaren Tangentialspanner gespannt wird bzw. wenn das Spannband mit dem abnehmbaren Tangentialspanner gespannt ist.

Zusätzlich oder alternativ ist es vorteilhaft, wenn die Spanneinheit derart angeordnet und/oder ausgebildet ist, dass im bestimmungsgemäßen Gebrauch die Spanneinheit und das Spannband mit einer Zugkraft beaufschlagbar sind, insbesondere derart, dass die beiden Enden des Spannbands in Umfangsrichtung zueinander hingezogen werden. Die Spanneinheit ist demnach nicht auf Druck, sondern auf Zug beansprucht.

Auch ist es vorteilhaft, wenn die Spanneinheit derart angeordnet und/oder ausgebildet ist, dass diese die beiden Enden in Umfangsrichtung derart zueinander hinzieht, dass diese im bestimmungemäßen Gebrauch am Außenumfang der Spannschelle anliegen. Zusätzlich oder alternativ ist es vorteilhaft, wenn die Spanneinheit ein Verbindungselement aufweist, das sich in Umfangsrichtung und/oder am Außenumfang der Spannschelle anliegend erstreckt und/oder die beiden Enden miteinander verbindet.

Die Spanneinheit kann beispielsweise ein Spannelement zum Spannen des Spannbandes, insbesondere ein Spannschloss und/oder eine Spannschraube, umfassen, so dass beide Enden aufeinander zugezogen werden. Die Spanneinheit kann auch ein Verbindungselement umfassen, welches die beiden Enden miteinander verbindet.

Vorzugsweise ist das Verbindungselement mit einem seiner beiden Enden fest an einem der beiden Enden des Spannbandes fixiert. Das andere der beiden Enden des Verbindungselementes korrespondiert mit dem Spannelement, das an dem anderen Ende des Spannbandes fixiert ist.

Außerdem kann das Spannelement an einem der beiden Enden des Spannbandes angeordnet sein.

Vorteilhaft ist es, wenn die Spannschelle einen Rastmechanismus aufweist, mittels dem die beiden Enden miteinander verrastet werden können. Mit Hilfe des Rastmechanismus können die beiden Enden zueinander fixiert werden, wenn die Spannschelle gespannt ist. Beispielsweise weist eines der beiden Enden eine gezackte Rastfläche und das entsprechend andere Ende zumindest ein Rastelement auf. Das Rastelement kann sich an der Rastfläche einhaken, so dass ein Lösen der Spannschelle verhindert werden kann, wenn diese gespannt ist. Das Rastelement kann ferner gefedert sein, so dass ein sicherer Eingriff des Rastelements mit der Rastfläche erreicht werden kann. Mit Hilfe des Rastmechanismus kann die Spannschelle fixiert werden, wenn diese mit einem externen Werkzeug, beispielsweise dem abnehmbaren Tangentialspanner, gespannt wird. Die Rastfläche und/oder das zumindest eine Rastelement können beispielsweise an zumindest einer Längsseite des Spannbandes angeordnet sein. Zusätzlich oder alternativ können die Rastfläche und/oder das zumindest eine Rastelement am Außenumfang und/oder an einem Innenumfang des Spannbandes angeordnet sein. Die Rastfläche und/oder das zumindest eine Rastelement sind im Allgemeinen derart angeordnet, dass das Rastelement der Rastfläche zugewandt ist, so dass das Rastelement mit der Rastfläche in Eingriff gebracht werden kann.

Erfindungsgemäß wird die Verwendung eines Spannbands als die Spannschelle vorgeschlagen.

Das Spannband kann eingerollt, aufgewickelt, gewunden, aufgerollt werden, um die Spannschelle zu bilden.

Weitere Vorteile der Erfindung sind in den nachfolgenden Ausführungsbeispielen beschrieben. Es zeigen:
- **Figur 1**: eine schematische Draufsicht auf ein nicht erfindungsgemäßes, ausgebreitetes Spannband für eine Spannschelle,
- **Figur 2**: eine perspektivische Ansicht einer nicht erfindungsgemäßen, schematischen Spannschelle,
- **Figur 3**: eine Draufsicht auf die nicht erfindungsgemäßen Spannschelle,
- **Figur 4**: eine perspektivische Ansicht einer schematischen Spannschelle mit zweifacher Windung,
- **Figur 5**: eine schematische Draufsicht auf ein ausgebreitetes Spannband für eine Spannschelle mit mehreren Aussparungen,
- **Figur 6**: eine schematische Draufsicht auf ein ausgebreitetes Spannband für eine Spannschelle mit mehreren Aussparungen und
- **Figur 7**: eine schematische Draufsicht auf ein ausgebreitetes Spannband für eine Spannschelle mit mehreren Aussparungen.

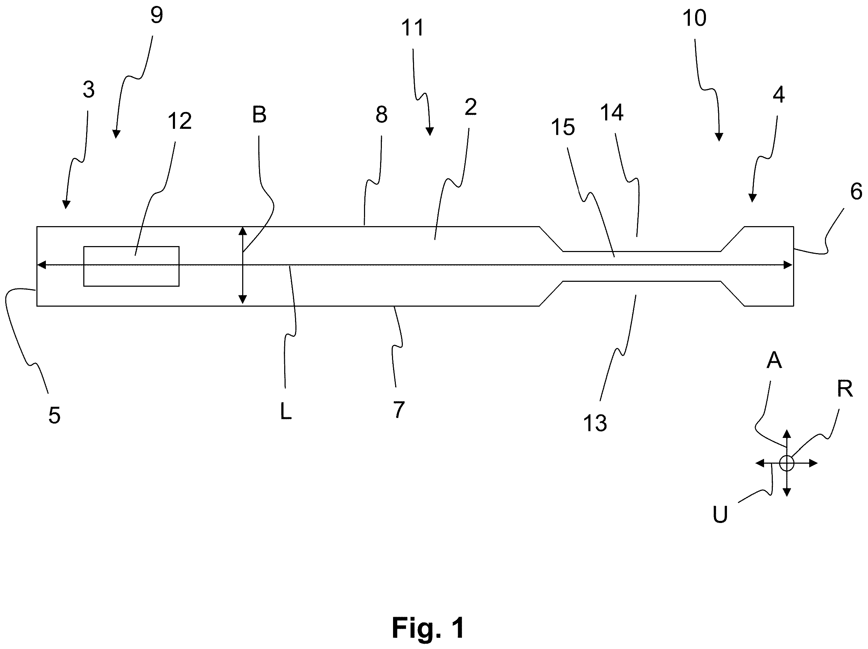

Figur 1 zeigt eine schematische Draufsicht auf ein nicht erfindungsgemäßes ausgebreitetes Spannband 2 für eine Spannschelle 1. Mit Hilfe der Spannschelle 1 kann beispielsweise eine Dichtung und/oder eine Rohrkupplung auf ein Rohr und/oder eine Leitung gepresst werden. Die Spannschelle 1 kann auch eine Rohrschelle sein. Mittels der Spannschelle 1 können beispielsweise zwei Rohre miteinander verbunden werden. Das Spannband 2 ist hier der Übersichtlichkeit halber ausgerollt bzw. flach dargestellt. Wenn das Spannband 2 zur Spannschelle 1 geschlossen ist, ist das Spannband 2 aufgewickelt, in sich gewunden, eingerollt und/oder aufgerollt, so dass es das Rohr in dessen Umfangsrichtung umschließen kann. Mit Hilfe der genannten Rohrkupplung können zwei Rohre miteinander verbunden werden. Dabei wird ein in Axialrichtung erster Abschnitt der Rohrkupplung mit einer ersten Spannschelle 1 auf ein Rohrende des ersten Rohres gepresst. Ein in Axialrichtung zweiter Abschnitt der Rohrkupplung wird mit einer zweiten Spannschelle 1 auf ein Rohrende des zweiten Rohres gepresst. Die Rohrkupplung verbindet dann beide Rohre und dichtet ferner einen Übergang zwischen beiden Rohren ab.

Das Spannband 2 weist ferner ein erstes Ende 3 und ein dazu gegenüberliegendes zweites Ende 4 auf.

Das Spannband 2 bzw. die Spannschelle 1, wenn das Spannband 2 zur Spannschelle 1 geschlossen ist, weist eine Umfangsrichtung U auf. Die beiden Enden 3, 4 sind entlang des Spannbandes 2 in Umfangsrichtung U voneinander beabstandet. Weiterhin weist das Spannband 2 bzw. die Spannschelle 1, wenn das Spannband 2 zur Spannschelle 1 geschlossen ist, eine Axialrichtung A auf. In Axialrichtung A erstreckt sich beispielsweise das Rohr, wenn die Spannschelle 1 um das Rohr gelegt ist. Ferner weist das Spannband 2 bzw. die Spannschelle 1 eine Radialrichtung R auf. Die Radialrichtung R ist senkrecht zur Umfangsrichtung U und zur Axialrichtung A orientiert. Die Radialrichtung R steht in diesem Ausführungsbeispiel senkrecht auf der Zeichenebene. Die Radialrichtung R zeigt in die Zeichenebene hinein bzw. kommt aus ihr senkrecht heraus.

Das Spannband 2 ist gemäß dem vorliegenden Ausführungsbeispiel band-und/oder streifenförmig ausgebildet.

Das Spannband 2 weist ferner eine Länge L auf. Die Länge L ist vorteilhafterweise derart bemessen, dass das Rohr zumindest einmal umschlungen werden kann. Die Länge L kann beispielsweise zwischen 30 cm und einigen Metern liegen, so dass die Spannschelle 1 um entsprechende Rohre gelegt werden kann. Entsprechend der Länge L sind auch die beiden Enden 3, 4 voneinander beabstandet.

Weiterhin weist das Spannband 2 eine Breite B auf. Das Spannband 2 weist dabei eine Zugfestigkeit auf, welche von der Breite B bestimmt wird. Das Spannband 2 kann ferner aus Metall und/oder einem Fasermaterial, wie beispielsweise Karbon-, Glas- und/oder Keramikfasern, ausgebildet sein, wobei die Zugfestigkeit ebenfalls von dem Material abhängt.

Das Spannband 2 weist des Weiteren eine erste Stirnseite 5 auf, welche am ersten Ende 3 angeordnet ist. Außerdem weist das Spannband 2 eine zweite Stirnseite 6 auf, welche am zweiten Ende 4 angeordnet ist.

Das Spannband 2 weist zusätzlich eine erste Längsseite 7 und eine zweite Längsseite 8 auf. Die beiden Längsseiten 7, 8 sind gemäß der Breite B des Spannbandes 2 voneinander beabstandet.

Außerdem weist das Spannband 2 einen ersten Endbereich 9 auf, welcher dem ersten Ende 3 und/oder der ersten Stirnseite 5 zugewandt ist. Des Weiteren weist das Spannband 2 einen zweiten Endbereich 10 auf, welcher dem zweiten Ende 4 und/oder der zweiten Stirnseite 6 zugewandt ist. Außerdem weist das Spannband 2 einen zwischen den beiden Endbereichen 9, 10 angeordneten Mittelbereich 11 auf. Der Mittelbereich 11 ist zwischen beiden Enden 3, 4 und/oder zwischen beiden Stirnseiten 5, 6 angeordnet.

Das Spannband weist ferner zumindest eine Aussparung 12, 13, 14 auf. Die zumindest eine Aussparung 12, 13, 14 ist dabei gemäß dem vorliegenden Ausführungsbeispiel zumindest einem der beiden Enden 3, 4 zugeordnet. Mittels der zumindest einen Aussparung 12, 13, 14 kann eines der beiden Ende 3, 4 in einer Radialrichtung von innen nach außen geführt werden.

Gemäß dem vorliegenden Ausführungsbeispiel ist eine erste Aussparung 12 dem ersten Ende 3 zugeordnet. Die erste Aussparung 12 ist im Bereich des ersten Endes 3 und/oder im ersten Endbereich 9 angeordnet. Durch diese erste Aussparung 12 kann somit das zweite Ende 4 geführt werden. Die erste Aussparung 12 ist somit eine erste Endaussparung.

Gemäß dem vorliegenden Ausführungsbeispiel ist die erste Aussparung 12 von beiden Längsseiten 7, 8 und von der ersten Stirnseite 5 beabstandet. Infolgedessen ist die Aussparung 12 vollständig vom Spannband 2 umrandet.

Zusätzlich oder alternativ weist das vorliegende Ausführungsbeispiel eine zweite Aussparung 13 auf, welche dem zweiten Ende 4 zugeordnet ist. Die zweite Aussparung 13 ist im Bereich des zweiten Endes 4 angeordnet.

Zusätzlich oder alternativ weist das vorliegende Ausführungsbeispiel eine dritte Aussparung 14 auf, welche dem zweiten Ende 4 zugeordnet ist. Die dritte Aussparung 14 ist im Bereich des zweiten Endes 4 angeordnet.

Die zweite und/oder dritte Aussparung 13, 14 sind somit zweite Endaussparungen, da sie dem zweiten Ende 4 zugeordnet sind.

Die zweite und die dritte hier gezeigte Aussparung 13, 14 sind von der zweiten Stirnseite 6 beabstandet angeordnet.

Ferner sind gemäß dem vorliegenden Ausführungsbeispiel die zweite Aussparung 13 und die dritte Aussparung 14 in Axialrichtung A voneinander beabstandet. Die zweite und die dritte Aussparung 13, 14 sind im gleichen Abschnitt in Umfangsrichtung U angeordnet.

Gemäß dem vorliegenden Ausführungsbeispiel ist die zweite Aussparung 13 an der ersten Längsseite 7 angeordnet. Die zweite Aussparung 13 ist an der ersten Längsseite 7 offen. Zusätzlich oder alternativ ist die dritte Aussparung 14 an der zweiten Längsseite 8 angeordnet. Die dritte Aussparung 14 ist an der zweiten Längsseite 8 offen.

Infolge der beiden Aussparungen 13, 14, welche insbesondere in Axialrichtung A zueinander versetzt sind, ist eine Verjüngung 15 ausgebildet. Die Verjüngung 15 kann in der ersten Aussparung 12 angeordnet werden, wenn das Spannband 2 zur Spannschelle 1 eingerollt wird.

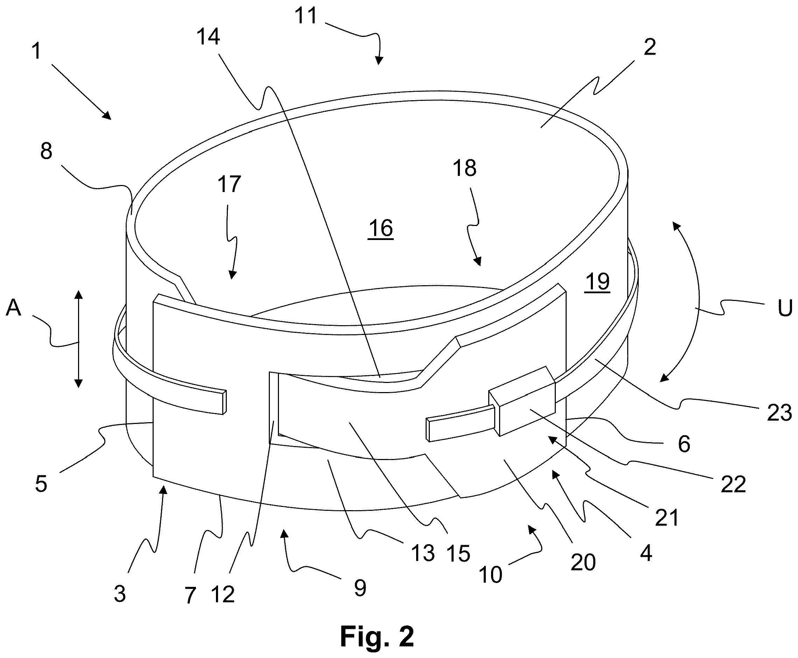

Figur 2 zeigt das nicht erfindungsgemäße Spannband 2, welches zu einer nicht erfindungsgemäßen Spannschelle 1 geschlossen ist. Das Spannband 2 ist dazu aufgewickelt, gewunden, eingerollt und/oder aufgerollt. Die Spannschelle 1 kann somit um ein Rohr gelegt werden. Die Spannschelle 1 weist eine Durchführung 16 auf, durch die das Rohr durchgeführt werden kann und in der das Rohr angeordnet ist, wenn die Spannschelle 1 um das Rohr gelegt ist. Das Spannband 2 umschließt die Durchführung 16. Das Spannband 2 kann die Durchführung 16 vollständig umschließen. Eine Größe der Durchführung 16 hängt dabei natürlich von der Länge L des Spannbandes 2 ab.

Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Gemäß dem vorliegenden Ausführungsbeispiel ist das zweite Ende 4 durch die erste Aussparung 12 in Radialrichtung R der Spannschelle 1 von innen nach außen geführt. Die beiden Enden 3, 4 sind somit an einem Außenumfang 19 der Spannschelle 1 angeordnet. Die beiden Stirnseiten 5, 6 der jeweiligen Enden 3, 4 sind somit in Umfangsrichtung U einander zugewandt.

Die durch die beiden Aussparungen 13, 14 gebildete Verjüngung 15 ist im Bereich der ersten Aussparung 12 angeordnet. Die Verjüngung 15 weist eine derartige Breite in Axialrichtung A auf, dass die Verjüngung 15 in der ersten Aussparung 12 angeordnet werden kann. Wenn das Spannband 2 zur Spannschelle 1 eingerollt ist, überschneiden sich die drei Aussparungen 12, 13, 14 zumindest teilweise in Umfangsrichtung U.

Des Weiteren ist gemäß dem vorliegenden Ausführungsbeispiel die hier gezeigte zweite und/oder dritte Aussparung 13, 14 von der zweiten Stirnseite 6 beabstandet. Dadurch weist das Spannband 2 gegenüber der Verjüngung 15 eine Verbreiterung 20 auf. Die Verbreiterung 20 bezieht sich dabei lediglich auf die in Umfangsrichtung U benachbarte Verjüngung 15. Die Verbreiterung 20 weist die Breite B des Spannbandes 2 auf. Die Verbreiterung 20 weist eine höhere Breite B auf als die erste Aussparung 12 in Axialrichtung A. Infolgedessen kann verhindert werden, dass das zweite Ende 4 durch die erste Aussparung 12 in Radialrichtung R vom Außenumfang 19 zurück nach innen rutscht.

Wenn das zweite Ende 4 durch die erste Aussparung 12 geführt wird, wird das zweite Ende 4 mit der Verbreiterung 20 gedreht, so dass die Verbreiterung 20 durch die erste Aussparung 12 geführt werden kann.

Ferner ist die erste Aussparung 12 vollständig vom Spannband 2 umrandet, so dass verhindert wird, dass das zweite Ende 4 aus der ersten Aussparung 12 herausrutscht.

Ferner weist die Spannschelle 1 des vorliegenden Ausführungsbeispiels zumindest einen Überlappungsbereich 17, 18 auf, in dem das Spannband 2 in Radialrichtung R zumindest zweilagig übereinanderliegt. Der zumindest eine Überlappungsbereich 17, 18 ist ein einfacher Überlappungsbereich 17, 18, da das Spannband 2 zweilagig ist und somit in diesem Überlappungsbereich 17, 18 nur einmal überlappt. Mittels des zumindest einen Überlappungsbereichs 17, 18 ist eine Haftreibung zwischen den übereinanderliegenden Bereichen des Spannbandes 2 ausgebildet. Eine Haltekraft des Spannbandes 2 kann dadurch erhöht werden. Dadurch wird insbesondere eine Haltekraft erhöht, wenn die Spannschelle 1 gespannt ist. Mittels des zumindest einen Überlappungsbereichs 17, 18 ist eine Selbsthemmung ausgebildet. Insbesondere wird die Selbsthemmung weiter erhöht, wenn das Rohr, auf dem die Spannschelle 1 angeordnet ist, mit einem Innendruck beaufschlagt ist. Dadurch presst sich im Überlappungsbereich 17, 18 ein in Radialrichtung R unterer Abschnitt des Spannbandes 2 nach Außen gegen einen in Radialrichtung R oberen bzw. darüberliegenden Abschnitt des Spannbandes 2. Die Fixierkraft, die nötig ist, um die beiden Enden gegeneinander zu fixieren, wenn das Rohr mit dem Innendruck beaufschlagt ist, verringert sich dadurch. Die Spannschelle 1 kann infolgedessen mit relativ einfachen Mitteln geschlossen gehalten werden.

Der zumindest eine Überlappungsbereich 17, 18 erstreckt sich in Umfangsrichtung U. Gemäß dem vorliegenden Ausführungsbeispiel erstreckt sich der zumindest eine Überlappungsbereich 17, 18 ebenfalls in Axialrichtung A.

Gemäß dem vorliegenden Ausführungsbeispiel weist die Spannschelle 1 zwei Überlappungsbereiche 17, 18 auf. Ein erster Überlappungsbereich 17 ist zwischen dem ersten Ende 3 bzw. einem Bereich am ersten Ende 3 und/oder dem ersten Endbereich 9 und dem in Radialrichtung R darunterliegenden Bereich des Spannbandes 2 ausgebildet. Ein zweiter Überlappungsbereich 18 ist zwischen dem zweiten Ende 4 bzw. einem Bereich am zweiten Ende 4 und/oder dem zweiten Endbereich 10 und dem in Radialrichtung R darunterliegenden Bereich des Spannbandes 2 ausgebildet. Beide Überlappungsbereiche 17, 18 sind in Umfangsrichtung U voneinander beabstandet.

Der zumindest eine Überlappungsbereich 17, 18 ist derart ausgebildet bzw. das Spannband 2 ist derart zur Spannschelle 1 eingerollt, aufgewickelt, umschlungen und/oder aufgerollt, dass im Überlappungsbereich 17, 18 die übereinanderliegenden Bereiche des Spannbandes 2 die gleiche Orientierung aufweisen. Das Spannband 2 ist lediglich in eine Umfangsrichtung U aufgewickelt, eingerollt, etc. Das Spannband 2 weist eine einzige Windungsrichtung auf. Das Spannband 2 ist schlaufenfrei.

Gemäß dem vorliegenden Ausführungsbeispiel weist die Spannschelle 1 zumindest eine Spanneinheit 21 zum Spannen der Spannschelle 1 auf. Mittels der Spanneinheit 21 können die beiden Enden 3, 4 aufeinander zugezogen werden. Die Spanneinheit 21 kann somit das Spannband 2 mit einer Spannkraft, insbesondere mit einer Zugkraft, beaufschlagen. Die Spanneinheit 21 ist im gespannten Zustand ebenfalls auf Zug beansprucht. Zusätzlich oder alternativ kann die Spannschelle 1 mit der Spanneinheit 21 auch fixiert werden. Insbesondere können mit der Spanneinheit 21 die beiden Enden 3, 4 gegeneinander fixiert werden. Dadurch kann verhindert werden, dass sich die Spannschelle 1 öffnet, wenn das Rohr mit dem Innendruck beaufschlagt ist. Mit Hilfe der Spanneinheit 21 kann eine Fixierkraft auf die beiden Enden 3, 4 gewirkt werden. Die Spanneinheit 21 kann somit auch eine Fixiereinheit 21 sein. Wenn mittels der Spanneinheit 21 bzw. der Fixiereinheit 21 die Spannschelle 1 bzw. die beiden Enden 3, 4 fixiert werden, kann die Spannschelle 1 mit einem externen Werkzeug, beispielsweise einem, insbesondere abnehmbaren, Tangentialspanner, gespannt werden. Mit Hilfe des Tangentialspanners kann das Spannband 2 mit der Spannkraft beaufschlagt werden.

Die Spanneinheit 21 weist gemäß dem vorliegenden Ausführungsbeispiel ein Spannelement 22 auf, welches an einem der beiden Enden 3, 4 angeordnet ist. In Figur 2 ist das Spannelement 22 am zweiten Ende 4 angeordnet. Ferner umfasst die Spanneinheit 21 ein Verbindungselement 23. Das Verbindungselement 23 weist ein erstes Verbindungselementende und ein zweites Verbindungselementende auf. Das Verbindungselement 23 verbindet die beiden Enden 3, 4 des Spannbands 2 miteinander. Das Verbindungselement 23 ist an einem der beiden Enden 3, 4 - vorliegend an dem ersten Ende 3 - fixiert. Hierfür ist das erste Verbindungselementende am ersten Ende 3 des Spannbandes 2 festgelegt, insbesondere form- oder stoffschlüssig befestigt. Das andere Das Spannelement 22 kann das Verbindungselement 23 mit der Spannkraft beaufschlagen, so dass die beiden Enden 3, 4 aufeinander zugezogen werden, wobei sich infolgedessen die Spannschelle 1 zuzieht und sich auf das Rohr presst. Das Spannelement 22 kann außerdem beispielsweise eine Spannschraube umfassen, mittels der das Verbindungselement 23 mit der Spannkraft beaufschlagbar ist.

Gemäß dem vorliegenden Ausführungsbeispiel weist das Spannband 2, wenn es zur Spannschelle 1 aufgewickelt bzw. eingerollt ist, lediglich eine Windungsrichtung auf. Das heißt, das Spannband 2 erstreckt sich vom ersten, insbesondere freien, Ende 3 in eine einzige Umfangsrichtung U bis zum zweiten Ende 4. Das Spannband 2 weist lediglich eine einzige Orientierung auf. Das Spannschelle 1 ist eine Helix und/oder eine Spirale. Das Spannband 2 ist spiralförmig aufgewickelt.

Gemäß dem vorliegenden Ausführungsbeispiel erstreckt sich das Spannband 2 um zumindest 360° in Umfangsrichtung U vom ersten Ende 3 bis zum zweiten Ende 4. Infolgedessen wird der zumindest eine Überlappungsbereich 17, 18 ausgebildet.

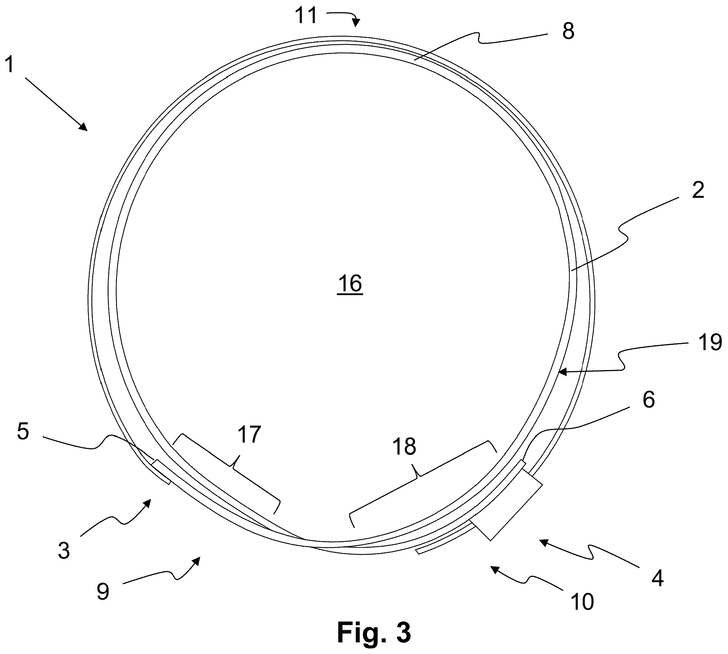

Figur 3 zeigt eine Draufsicht auf die nicht erfindungsgemäße Spannschelle 1, wie diese beispielsweis in Figur 2 dargestellt ist.

Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Zu sehen ist, dass gemäß dem vorliegenden Ausführungsbeispiel beide Enden 3, 4 am Außenumfang 19 der Spannschelle 1 angeordnet sind.

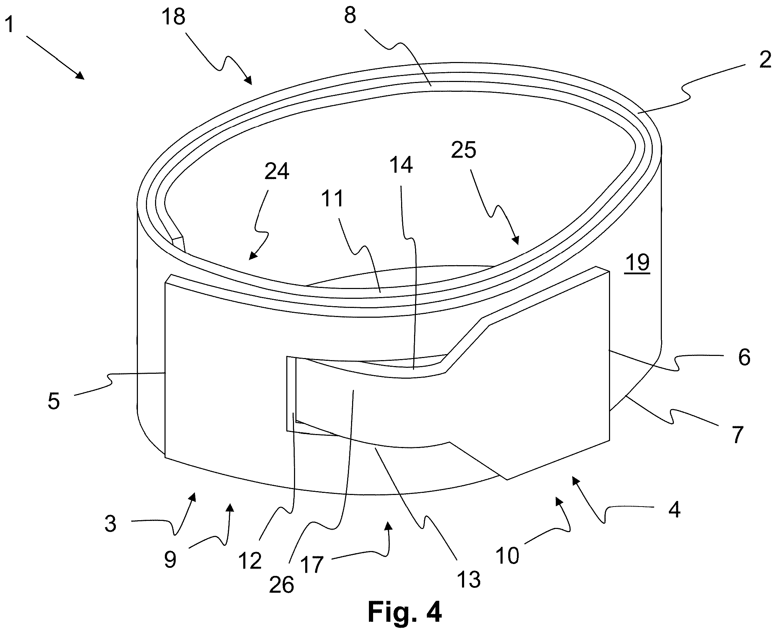

Figur 4 zeigt eine perspektivische Ansicht einer schematischen Spannschelle 1 mit zumindest zweifacher Windung. Gemäß dem vorliegenden Ausführungsbeispiel ist das Spannband 2 zumindest zweimal gewunden, eingerollt, aufgewickelt. Eine Windungszahl ist hier zumindest zwei.

Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Der zumindest eine Überlappungsbereich 17, 18, 24, 25 des vorliegenden Ausführungsbeispiels der Spannschelle 1 erstreckt sich hier vollständig in Umfangsrichtung U um die Spannschelle 1. Der Überlappungsbereich 17, 18, 24, 25 erstreckt sich sogar mindestens einmal in Umfangsrichtung U um die Spannschelle 1. Der Überlappungsbereich 17, 18, 24, 25 des vorliegenden Ausführungsbeispiels erstreckt sich in Umfangsrichtung um mehr als 360°.

Gemäß dem vorliegenden Ausführungsbeispiel weist die Spannschelle 1 den ersten und den zweiten Überlappungsbereich 17, 18 auf, welche als einfache Überlappungsbereiche 17, 18 ausgebildet sind. In einfachen Überlappungsbereichen 17, 18 liegt das Spannband 2 einfach übereinander, so dass es zweilagig ist. Außerdem weist die Spannschelle 1 einen dritten und vierten Überlappungsbereich 24, 25 auf, welche als doppelte Überlappungsbereiche 24, 25 ausgebildet sind. In dem zumindest einen doppelten Überlappungsbereich 24, 25 ist das Spannband 2 dreilagig angeordnet. Die Spannschelle 1 weist zwei einfache und zwei doppelte Überlappungsbereiche 17, 18, 24, 25 auf, wobei in Umfangsrichtung U zwischen zwei einfachen ein doppelter und zwischen zwei doppelten ein einfacher Überlappungsbereich 17, 18, 24, 25 angeordnet ist. Die einfachen und die doppelten Überlappungsbereiche 17, 18, 24, 25 wechseln sich somit in Umfangsrichtung U ab.

Mit Hilfe des zumindest einen doppelten Überlappungsbereichs 24, 25 kann die Haftreibung noch weiter erhöht werden, wenn die Spannschelle 1 gespannt ist. Die Spannschelle 1 weist eine hohe Selbsthemmung auf.

Der erste doppelte Überlappungsbereich 24 ist hier im Bereich des ersten Endes 3 und/oder des ersten Endbereichs 9 angeordnet. Der zweite doppelte Überlappungsbereich 25 ist hier im Bereich des zweiten Endes 4 und/oder des zweiten Endbereichs 10 angeordnet.

Wenn das Spannband 2 zumindest zweimal aufgerollt ist, es sich also zumindest zweimal in Umfangsrichtung U erstreckt, weist dies ebenfalls einen Vorteil auf. Werden zum Spannen der Spannschelle 1 die beiden zueinander zugewandten Enden 3, 4 mit Hilfe der hier nicht gezeigten Spanneinheit 21 (vgl. Figur 2) aufeinander zugezogen, bildet sich durch das zumindest zweimalig umschlungene Spannband 2 ein Flaschenzugeffekt aus. Durch das zweimalig umschlungene Spannband 2 müssen die beiden Enden 3, 4 zwar um einen längeren Spannweg aufeinander zugezogen werden, um die Spannschelle 1 auf das Rohr zu pressen, als wenn das Spannband 2 lediglich einmal umschlungen ist. Jedoch bringt gerade dies den Vorteil, dass dafür eine geringere Spannkraft nötig ist. Gemäß dem Zusammenhang, dass die Arbeit gleich dem Produkt aus Kraft und Weg ist, verringert sich die Kraft, was hier die Spannkraft ist, bei gleichzeitiger Erhöhung des Weges, was hier der Spannweg ist, um die die beiden Enden 3, 4 aufeinander zugezogen werden, wobei die Arbeit, welche die Spannarbeit ist, konstant bleibt. Die Spannschelle 1 kann somit mit einer geringeren Kraft, nämlich der Spannkraft, gespannt werden. Die Enden 3, 4 müssen dagegen weiter zusammengezogen werden. Natürlich kann die Spannschelle 1 auch mit einer gleichbleibenden Spannkraft gespannt werden. Infolgedessen erhöht sich durch den Flaschenzugeffekt eine Anpresskraft der Spannschelle 1 auf das Rohr.

Dieser Effekt des Flaschenzuges kann noch weiter verstärkt werden, wenn das Spannband 2 mehrmals eingerollt, aufgewickelt, umschlungen und/oder aufgerollt wird. Das Spannband 2 weist dann entsprechend mehrere Windungen auf. Das Spannband 2 kann beispielsweise dreimal, viermal, fünfmal oder sechsmal eingerollt, aufgewickelt, umschlungen und/oder aufgerollt sein. Dadurch kann die Spannkraft weiter gesenkt sein, so dass die Spannschelle 1 einfacher auf das Rohr gepresst werden kann. Alternativ kann dadurch auch die Anpresskraft der Spannschelle 1 auf das Rohr vergrößert werden.

Dies weist ferner den weiteren Vorteil auf, dass die Spannschelle 1 mehrere Überlappungsbereiche 17, 18, 24, 25 aufweist. Ist das Spannband 2 mehrfach eingerollt, bilden sich mehrfache Überlappungsbereiche 17, 18, 24, 25 aus, in denen das Spannband 2 mehrlagig übereinanderliegt. Die Haftreibung der übereinanderliegenden Bereiche des Spannbandes 2 in den Überlappungsbereichen 17, 18, 24, 25 vervielfältigt sich dadurch, so dass die Spannschelle 1 eine hohe Haltekraft aufweist, wenn es gespannt ist. Zum Halten der Spannschelle 1, wenn es gespannt ist, wird infolgedessen wenig Haltekraft benötigt.

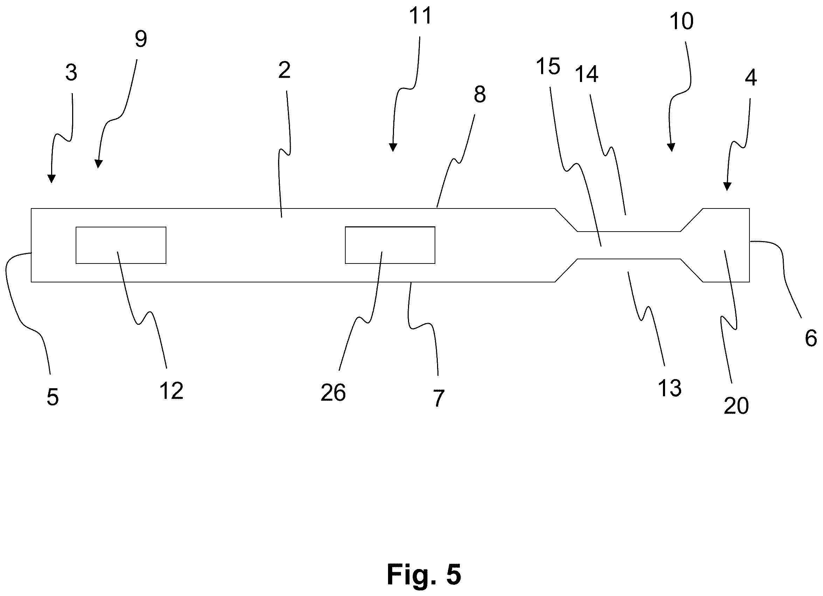

Bei dem zumindest zweimal eingerollten, aufgewickelten, umschlungenen und/oder aufgerollten Spannband 2 ist zumindest ein Ende 3, 4 durch zumindest eine der Aussparungen 12, 13, 14, 26 in Radialrichtung von innen nach außen an den Außenumfang 19 geführt. Im vorliegenden Ausführungsbeispiel weist das Spannband 2 eine vierte Aussparung 26 auf, welche hier in Radialrichtung R unter der ersten Aussparung 12 angeordnet ist, so dass das zweite Ende 4 durch die vierte Aussparung 26 und die erste Aussparung 12 geführt ist. Das zweite Ende 4 muss das Spannband 2 zweimal in Radialrichtung R durchqueren, da das Spannband zweimal eingerollten, aufgewickelten, umschlungenen und/oder aufgerollten ist bzw. da sich das Spannband 2 zumindest zweimal in Umfangsrichtung U erstreckt. Die vierte Aussparung 26 ist besser in Figur 5 zu sehen. Die erste Aussparung 12 und die vierte Aussparung 26 überschneiden sich in Umfangsrichtung U zumindest teilweise.

Ist das Spannband mehrmals eingerollten, aufgewickelten, umschlungenen und/oder aufgerollten bzw. erstreckt sich das Spannband 2 mehrmals in Umfangsrichtung U, muss eines der beiden Enden 3, 4 entsprechend oft durch zumindest eine Aussparung 12, 13, 14, 26 durch das Spannband 2 in Radialrichtung R von innen nach außen an den Außenumfang 19 geführt werden, bis beide Enden 3, 4 am Außenumfang 19 angeordnet sind.

Figur 5 zeigt ein Spannband 2 mit mehreren Aussparungen 12, 13, 14, 26, welches zumindest zweimal eingerollt aufgewickelten, umschlungenen und/oder aufgerollten werden kann.

Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Im Mittelbereich 11 ist die vierte Aussparung 26 angeordnet. Beispielsweise wird beim Einrollen des Spannbandes 2 das zweite Ende 4 beim erstmaligen Einrollen zuerst durch die vierte Aussparung 26 geführt und beim zweitmaligen Einrollen durch die erste Aussparung 12 geführt, so dass beide Enden 3, 4 am Außenumfang 19 angeordnet sind. Insbesondere ist die Verjüngung 15 bei eingerolltem Spannband 2, so dass die Spannschelle 1 ausgebildet ist, im Bereich der vierten und der ersten Aussparung 26, 12 angeordnet. Die vierte Aussparung 26 ist von beiden Längsseiten 7, 8 und von beiden Stirnseiten 5, 6 beabstandet, so dass diese vollständig vom Spannband 2 umrandet ist.

Gemäß dem vorliegenden Ausführungsbeispiel sind die erste Aussparung 12, die vierte Aussparung 26 und das Paar aus der zweiten und dritten Aussparung 13, 14 in Umfangsrichtung U äquidistant voneinander angeordnet. Die Aussparungen 12, 13, 14, 26 überschneiden sich, wenn das Spannband 2 zur Spannschelle 1 eingerollt ist, so dass zumindest ein Ende 3, 4 durch die sich überschneidenden Aussparungen 12, 13, 14, 26 geführt werden kann.

Soll das Spannband 2 mehrfach eingerollt, aufgewickelt, umschlungen und/oder aufgerollt sein, muss zumindest ein Ende 3, 4 entsprechend oft in Radialrichtung R von innen nach außen durch das Spannband 2 geführt werden, bis sich beide Enden 3, 4 am Außenumfang 19 befinden. Dies kann beispielsweise dadurch gelingen, dass das Spannband 2 entsprechend viele Aussparungen 12, 13, 14, 26 in Umfangsrichtung U aufweist. Die Aussparungen 12, 13, 14, 26 weisen im Wesentlichen einen Abstand in Umfangsrichtung U voneinander auf, welcher sich aus dem Durchmesser der daraus gebildeten Spannschelle 1 mal der Kreiszahl Pi errechnet.

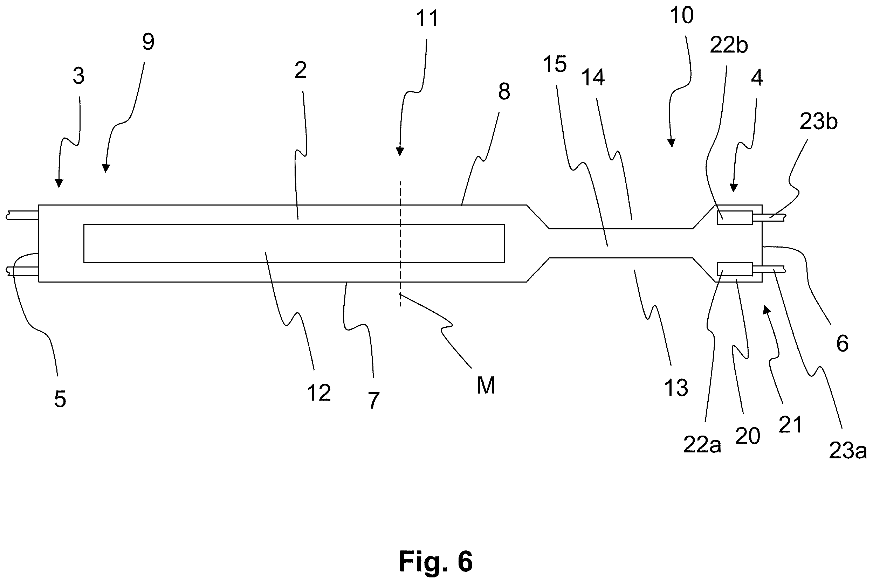

Figur 6 zeigt eine schematische Draufsicht auf ein ausgebreitetes Spannband 2 mit Aussparungen 12, 13, 14. Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Die erste Aussparung 12 erstreckt sich gemäß dem vorliegenden Ausführungsbeispiel vom ersten Endbereich 9 bis in den Mittelbereich 11 und insbesondere über den Mittelbereich 11 hinweg in Richtung des zweiten Endes 4. Mittels einer derartigen ersten Aussparung 12 kann das Spannband 2 ebenfalls zumindest zweimal eingerollt, aufgewickelt, umschlungen und/oder aufgerollt werden. Die erste Aussparung 12 erstreckt sich in Umfangsrichtung U über eine Mitte M hinweg. Dadurch kann beispielsweise das zweite Ende 4 zweimal durch die erste Aussparung 12 von innen nach außen geführt werden.

Gemäß dem vorliegenden Ausführungsbeispiel weist die Spanneinheit 21 zwei Spannelemente 22a, 22b und zwei Verbindungselemente 23a, 23b auf.

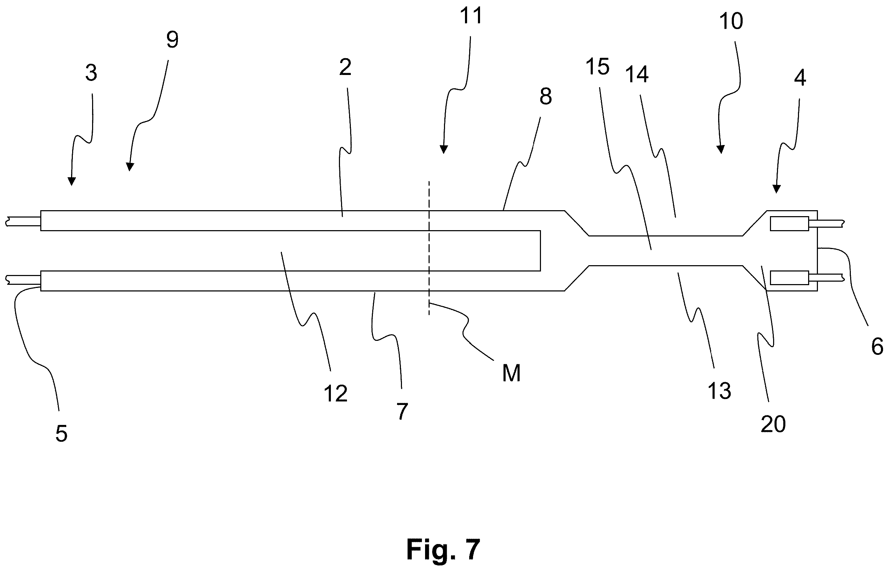

Figur 7 zeigt eine schematische Draufsicht auf ein ausgebreitetes Spannband 2 mit Aussparungen 12, 13, 14. Ferner werden der Einfachheit halber Merkmale und deren Wirkung, die bereits in den vorangegangenen Figuren beschrieben sind, nicht nochmals erklärt. Ferner weisen im Vergleich zu den vorangegangenen und/oder nachfolgenden Figuren gleiche Merkmal oder zumindest ähnlich wirkende Merkmale gleiche Bezugszeichen auf. So können beispielsweise Merkmale der Übersichtlichkeit halber auch erst in den folgenden Figuren beschrieben sein.

Die erste Aussparung 12 erstreckt sich gemäß dem vorliegenden Ausführungsbeispiel vom ersten Endbereich 9 bis in den Mittelbereich 11 und insbesondere über den Mittelbereich 11 hinweg in Richtung des zweiten Endes 4. Die erste Aussparung 12 erstreckt sich über die Mitte M des Spannbandes 2 hinweg. Mittels einer derartigen ersten Aussparung 12 kann das Spannband 2 ebenfalls zumindest zweimal eingerollt, aufgewickelt, umschlungen und/oder aufgerollt werden. Die erste Aussparung 12 erstreckt sich bis zur ersten Stirnseite 5, so dass die erste Aussparung 12 an der ersten Stirnseite 5 offen ist.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Spannschelle
- 2: Spannband
- 3: erstes Ende
- 4: zweites Ende
- 5: erste Stirnseite
- 6: zweite Stirnseite
- 7: erste Längsseite
- 8: zweite Längsseite
- 9: erster Endbereich
- 10: zweiter Endbereich
- 11: Mittelbereich
- 12: erste Aussparung
- 13: zweite Aussparung
- 14: dritte Aussparung
- 15: Verjüngung
- 16: Durchführung
- 17: erster Überlappungsbereich
- 18: zweiter Überlappungsbereich
- 19: Außenumfang
- 20: Verbreiterung
- 21: Spanneinheit
- 22: Spannelement
- 23: Verbindungselement
- 24: dritter Überlappungsbereich
- 25: vierter Überlappungsbereich
- 26: vierte Aussparung

- A: Axialrichtung
- U: Umfangsrichtung
- R: Radialrichtung
- L: Länge
- B: Breite
- M: Mitte

## Patentansprüche

1. Spannschelle (1)
mit einem Spannband (2),
das ein erstes Ende (3),
ein zweites Ende (4) und
zumindest eine Aussparung (12, 26) aufweist,
wobei eines der beiden Enden (4) durch die zumindest eine Aussparung (12, 26) in Radialrichtung (R) der Spannschelle (1) von innen nach außen geführt ist, so dass beide Enden (3, 4) am Außenumfang (19) der Spannschelle (1) angeordnet sind,
wobei das Spannband (2) zumindest einen in Umfangsrichtung (U) der Spannschelle (1) erstreckenden Überlappungsbereich (17, 18, 24, 25) aufweist, in dem das Spannband (2) in Radialrichtung (R) zumindest zweilagig übereinander liegt, wobei die zumindest zwei Lagen des Spannbands (2) im bestimmungsgemäßen Gebrauch im Überlappungsbereich (17, 18, 24, 25) in Radialrichtung aneinander anliegen, wobei
sich das Spannband (2) über mehr als 720° in Umfangsrichtung (U) erstreckt,
**dadurch gekennzeichnet, dass** das Spannband (2) im Bereich der zumindest einen Aussparung (12, 26) in Radialrichtung (R) mehrlagig übereinander liegt und dass das von innen nach außen geführte Ende (4) durch diese mehreren Lagen des Spannbandes (2) geführt ist.

2. Spannschelle nach dem vorherigen Anspruch, **dadurch gekennzeichnet, dass** zumindest eines der beiden Enden (3, 4) flach auf dem Spannband (2) aufliegt.

3. Spannschelle nach einem oder mehreren der vorherigen Ansprüche, **dadurch gekennzeichnet, dass** sich das Spannband (2) über mehr als 1080° oder 1440° in Umfangsrichtung (U) erstreckt.

4. Spannschelle nach einem oder mehreren der vorherigen Ansprüche, **dadurch gekennzeichnet, dass** das Spannband (2) zumindest zwei Aussparungen (12, 26) aufweist, die zum Durchführen des Endes (4) derart in Umfangsrichtung (U) angeordnet sind, dass diese sich zumindest teilweise in Radialrichtung (R) überdecken.

5. Spannschelle nach einem oder mehreren der vorherigen Ansprüche, **dadurch gekennzeichnet, dass** die zumindest eine Aussparung (12, 26) über ihren Umfang geschlossen und/oder vollständig vom Spannband (2) umrandet ist oder
dass die zumindest eine Aussparung (12, 26) an ihrem Umfang eine Öffnung aufweist.

6. Spannschelle nach einem oder mehreren der vorherigen Ansprüche, **dadurch gekennzeichnet, dass** sich die zumindest eine Aussparung (12, 26) von einem Bereich des zugeordneten Endes (3, 4) bis über eine Mitte (M) des Spannbandes (2) in Umfangsrichtung (U) erstreckt und/oder dass sich die zumindest eine Aussparung (12, 26) bei eingerolltem Spannband (2) selbst zumindest einmal in Radialrichtung (R) überschneidet.

7. Spannschelle nach einem oder mehreren der vorherigen Ansprüche, **dadurch gekennzeichnet, dass** die Spannschelle (1) eine Spanneinheit (21), insbesondere eine Zugkrafteinheit, aufweist, die die beiden in Umfangsrichtung (U) zueinander zugewandten Enden (3, 4) des Spannbandes (2) miteinander verbindet.

8. Spannschelle nach dem vorherigen Anspruch 7, **dadurch gekennzeichnet, dass** die Spanneinheit (21) ein Verbindungselement (23) aufweist, das sich in Umfangsrichtung (U) und/oder am Außenumfang (19) der Spannschelle (1) anliegend erstreckt und/oder die beiden Enden (3, 4) miteinander verbindet.

9. Verwendung eines Spannbands (2) als Spannschelle (1) das ein erstes Ende (3),
ein dazu gegenüberliegendes zweites Ende (4) und
zumindest eine Aussparung (12, 26) aufweist,
wobei bei verwendungsgemäßer Bestimmung eines der beiden Enden (3, 4) durch die zumindest eine Aussparung (12, 26) geführt wird, wobei sich infolgedessen die Spannschelle bildet,
**dadurch gekennzeichnet,**
**dass** das Spannband (2) als eine Spannschelle (1) gemäß einem oder mehreren der vorherigen Ansprüche verwendet wird.

## Claims

1. Clamp (1)
with a clamping band (2),
which has a first end (3),
a second end (4) and
at least one recess (12, 26),
wherein one of the two ends (4) is led through the at least one recess (12, 26) in the radial direction (R) of the clamp (1) from the inside to the outside, so that both ends (3, 4) are arranged on the outer circumference (19) of the clamp (1),
wherein the clamping band (2) has at least one overlapping area (17, 18, 24, 25) extending in the circumferential direction (U) of the clamp (1), in which the clamping band (2) lies at least in two layers on top of one another in the radial direction (R), wherein the at least two layers of the clamping band (2) lie against one another in the overlapping area (17, 18, 24, 25) in the radial direction in the intended use, wherein the clamping band (2) extends over more than 720° in the circumferential direction (U),
**characterized in that**
the clamping band (2) lies in several layers on top of one another in the radial direction (R) in the area of the at least one recess (12, 26) and
the end (4) led from the inside to the outside is led through these several layers of the clamping band (2).

2. Clamp according to the preceding claim, **characterized in that** at least one of the two ends (3, 4) lies flat on the clamping band (2).

3. Clamp according to one or more of the preceding claims, **characterized in that** the clamping band (2) extends over more than 1080° or 1440° in the circumferential direction (U).

4. Clamp according to one or more of the preceding claims, **characterized in that** the clamping band (2) has at least two recesses (12, 26), which are arranged in the circumferential direction (U) for leading through the end (4) in such a way that they overlap at least partially in the radial direction (R).

5. Clamp according to one or more of the preceding claims, **characterized in that** the at least one recess (12, 26) is closed over its circumference and/or completely bordered by the clamping band (2) or the at least one recess (12, 26) has an opening on its circumference.

6. Clamp according to one or more of the preceding claims, **characterized in that** the at least one recess (12, 26) extends from an area of the assigned end (3, 4) to over a center (M) of the clamping band (2) in the circumferential direction (U) and/or that the at least one recess (12, 26) overlaps itself at least once in the radial direction (R) when the clamping band (2) is rolled in.

7. Clamp according to one or more of the preceding claims, **characterized in that** the clamp (1) has a clamping unit (21), in particular a tensile force unit, which connects the two ends (3, 4) of the clamping band (2) facing each other in the circumferential direction (U).

8. Clamp according to the preceding claim 7, **characterized in that** the clamping unit (21) has a connecting element (23), which extends in the circumferential direction (U) and/or lying on the outer circumference (19) of the clamp (1) and/or connects the two ends (3, 4) to each other.

9. Use of a clamping band (2) as a clamp (1) which has a first end (3),
a second end (4) opposite thereto and
at least one recess (12, 26),
wherein, in the intended use, one of the two ends (3, 4) is led through the at least one recess (12, 26), wherein the clamp is formed as a result,
**characterized in that**
the clamping band (2) is used as a clamp (1) according to one or more of the preceding claims.

## Revendications

1. Collier de serrage (1)
avec une bande de serrage (2),
qui présente une première extrémité (3),
une seconde extrémité (4) et
au moins un évidement (12, 26),
dans lequel l'une des deux extrémités (4) est guidée de l'intérieur vers l'extérieur à travers au moins un évidement (12, 26) dans la direction radiale (R) du collier de serrage (1), de sorte que les deux extrémités (3, 4) sont disposées sur la périphérie extérieure (19) du collier de serrage (1),
dans lequel la bande de serrage (2) présente au moins une zone de chevauchement (17, 18, 24, 25) s'étendant dans la direction périphérique (U) du collier de serrage (1), dans laquelle la bande de serrage (2) est superposée au moins en deux couches dans la direction radiale (R), dans lequel les au moins deux couches de la bande de serrage (2) s'appliquent l'une contre l'autre dans la direction radiale dans la zone de chevauchement (17, 18, 24, 25) lors de l'usage conforme aux prescriptions,
dans lequel la bande de serrage (2) s'étend sur plus de 720° dans la direction périphérique (U),
**caractérisé en ce que**
la bande de serrage (2) est superposée en plusieurs couches dans la zone d'au moins un évidement (12, 26) dans la direction radiale (R) et l'extrémité (4) guidée de l'intérieur vers l'extérieur est guidée à travers ces plusieurs couches de la bande de serrage (2).

2. Collier de serrage selon la revendication précédente, **caractérisé en ce qu'**au moins l'une des deux extrémités (3, 4) repose à plat sur la bande de serrage (2).

3. Collier de serrage selon l'une ou plusieurs des revendications précédentes, **caractérisé en ce que** la bande de serrage (2) s'étend sur plus de 1080° ou 1440° dans la direction périphérique (U).

4. Collier de serrage selon l'une ou plusieurs des revendications précédentes, **caractérisé en ce que** la bande de serrage (2) présente au moins deux évidements (12, 26) qui sont disposés pour faire passer l'extrémité (4) dans la direction périphérique (U) de telle sorte que ceux-ci se recouvrent au moins en partie dans la direction radiale (R).

5. Collier de serrage selon l'une ou plusieurs des revendications précédentes, **caractérisé en ce qu'**au moins un évidement (12, 26) est fermé sur sa périphérie et/ou bordé complètement par la bande de serrage (2) ou
au moins un évidement (12, 26) présente une ouverture sur sa périphérie.

6. Collier de serrage selon l'une ou plusieurs des revendications précédentes, **caractérisé en ce qu'**au moins un évidement (12, 26) s'étend d'une zone de l'extrémité associée (3, 4) jusqu'à un centre (M) de la bande de serrage (2) dans la direction périphérique (U) et/ou **en ce qu'**au moins un évidement (12, 26) se chevauche lui-même au moins une fois dans la direction radiale (R) lorsque la bande de serrage (2) est enroulée.

7. Collier de serrage selon l'une ou plusieurs des revendications précédentes, **caractérisé en ce que** le collier de serrage (1) présente une unité de serrage (21), en particulier une unité de force de traction, qui relie l'une à l'autre les deux extrémités (3, 4) tournées l'une vers l'autre dans la direction périphérique (U) de la bande de serrage (2).

8. Collier de serrage selon la revendication précédente 7, **caractérisé en ce que** l'unité de serrage (21) présente un élément de liaison (23) qui s'étend en s'appliquant dans la direction périphérique (U) et/ou sur la périphérie extérieure (19) du collier de serrage (1) et/ou relie l'une à l'autre les deux extrémités (3, 4).

9. Usage d'une bande de serrage (2) en tant que collier de serrage (1) qui présente une première extrémité (3),
une seconde extrémité (4) opposée à celle-ci et
au moins un évidement (12, 26),
dans lequel lors de l'usage conforme aux prescriptions, l'une des deux extrémités (3, 4) est guidée à travers au moins un évidement (12, 26), le collier de serrage se formant en conséquence,
**caractérisé en ce que**
la bande de serrage (2) est utilisée en tant que collier de serrage (1) selon l'une ou plusieurs des revendications précédentes.
